(19) Europäisches Patentamt / European Patent Office / Office européen des brevets

(11) **EP 4 752 973 A1**

(12) **EUROPEAN PATENT APPLICATION**
published in accordance with Art. 153(4) EPC

(43) Date of publication:
**03.06.2026 Bulletin 2026/23**

(21) Application number: **24845699.8**

(22) Date of filing: **26.07.2024**

(51) International Patent Classification (IPC):
$H01M \ 4/525 \ ^{(2010.01)}$    $C01G \ 53/00 \ ^{(2025.01)}$
$H01M \ 4/36 \ ^{(2006.01)}$    $H01M \ 4/505 \ ^{(2010.01)}$

(52) Cooperative Patent Classification (CPC):
**C01G 53/00; H01M 4/36; H01M 4/505; H01M 4/525;**
**Y02E 60/10**

(86) International application number:
**PCT/JP2024/026838**

(87) International publication number:
**WO 2025/023325 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 JP 2023122907**

(71) Applicant: **BASF SE**
**67056 Ludwigshafen am Rhein (DE)**

(72) Inventors:
• **IMAHASHI, Taiki**
**Sanyoonoda-shi, Yamaguchi 756-0847 (JP)**
• **MATSUMOTO, Kazutoshi**
**Matsudo-shi, Chiba 271-0096 (JP)**

(74) Representative: **Maiwald GmbH**
**Elisenhof**
**Elisenstraße 3**
**80335 München (DE)**

(54) **COATED PARTICLE AND METHOD FOR MANUFACTURING SAME, POSITIVE ELECTRODE ACTIVE MATERIAL FOR NONAQUEOUS ELECTROLYTE SECONDARY BATTERY, AND NONAQUEOUS ELECTROLYTE SECONDARY BATTERY**

(57)    [Problem] To provide coated particles that, when used as a positive electrode active material for a nonaqueous electrolyte secondary battery, allow the nonaqueous electrolyte secondary battery in which the particles are used to exhibit excellent charging/discharging capacity and cycle characteristics.

The coated particles according to the present disclosure have a lithium metal composite oxide, **in** the form of a primary particle or a secondary particle, that includes at least lithium and nickel; a first layer including nickel(II) oxide on at least part of a surface of the lithium metal composite oxide; and a second layer including an oxide, containing lithium and one or more selected from the group consisting of boron, phosphorus, and sulfur, on at least part of a surface of the first layer.

[Fig. 1]

## Description

[Technical Field]

The present disclosure relates to a coated particle and method for producing the same, a positive electrode active material for a nonaqueous electrolyte secondary, and a nonaqueous electrolyte secondary battery.

[Background Art]

Lithium ion secondary batteries are small and lightweight, and also have a high energy density, a high charge/discharge voltage, and a substantial charging/discharging capacity, and have thus garnered attention as power sources for driving AV devices or personal computers and other such electronic devices.

Lithium ion secondary batteries in which layered or spinel-type lithium transition metal composite oxides are used as the positive electrode active material can provide a high voltage of about 4 volts, and are therefore increasingly being put to practical use as high energy density batteries. Examples of materials that have been primarily proposed include: lithium-cobalt composite oxides ($LiCoO_2$), which are relatively easy to synthesize; lithium-nickel composite oxides ($LiNiO_2$) obtained using nickel, which is less expensive than cobalt; lithium-nickel-cobalt-manganese composite oxides ($LiNi_{1/3}Co_{1/3}Mn_{1/3}O_2$); and lithium-manganese composite oxides ($LiMn_2O_4$) obtained using manganese.

Such lithium metal composite oxides can generally be produced by mixing a lithium source and a metal source such as nickel, and then firing the mixture. The positive electrodes of the lithium ion secondary batteries here are formed by, for example, mixing a positive electrode active material with a binder such as polyvinylidene fluoride (PVDF) or a solvent such as N-methyl-2-pyrrolidone (NMP) into the form of a positive electrode mix paste, which is applied to a current collector made of aluminum foil, for example. Any lithium that is released at that time from the lithium metal composite oxide in the positive electrode mix paste may react with moisture contained in the binder, for example, and generate lithium hydroxide.

When the generation of lithium hydroxide increases in this manner, reactions between the lithium hydroxide and binder cause the positive electrode mix paste to gel. The gelation of the positive electrode mix paste leads to poor handling during the production process and to lower yields. This tendency becomes quite pronounced when the proportion of lithium in the lithium-transition metal composite oxide serving as the positive electrode active material is in excess of the stoichiometric ratio relative to the transition metal, especially when there is a high proportion of nickel in the transition metal.

The release of lithium here may possibly come from the portion of lithium that has not been incorporated into the crystal lattice of the lithium metal composite oxide, as well as from lithium that has been incorporated into the crystal lattice of the lithium metal composite oxide. When the lithium that has been incorporated into the crystal lattice of the lithium metal composite oxide is eluted, the resistance of the lithium metal composite oxide increases, which may lower the charging/discharging efficiency.

The fired material is washed with water to remove the portion of the lithium that has not been incorporated into the crystal lattice of the lithium metal composite oxide, as disclosed in Patent Document 1, for example.

The lithium metal composite oxide is coated with an oxygen-containing boron compound to prevent the elution of lithium that has been incorporated into the crystal lattice, as disclosed in Patent Document 2, for example.

[Prior Art Documents]

[Patent Documents]

[Patent Document 1] JP 2005-97087 A
[Patent Document 2] JP 2019-114560 A

[Summary of the Invention]

[Problem to be Solved by the Invention]

According to the findings of the inventors of the present invention, however, when lithium metal composite oxides are washed with water in an attempt to remove the lithium, as in Patent Document 1, ion-proton exchange in the lithium that has been incorporated into the crystal lattice results in either the loss of lithium on the surface of the lithium metal composite oxide or in rock-salt phase conversion of the surface of the lithium metal composite oxide, leading to a lower lithium ion secondary battery charging/discharging capacity.

Coating lithium metal composite oxide with an oxygen-containing boron compound, as in Patent Document 2, is effective to some extent in enhancing cycle characteristics by preventing the lithium in the crystal lattice of the lithium metal composite oxide from being eluted into the electrolyte solution, but there is still room for further improvement in terms of enhancing cycle characteristics.

In view of the circumstances noted above, an object of the present disclosure is to provide coated particles which, when used as a positive electrode active material for a nonaqueous electrolyte secondary battery such as a lithium ion secondary battery, allow the nonaqueous electrolyte secondary battery in which the particles are used to exhibit excellent charging/discharging capacity and cycle characteristics.

[Means for Solving the Problem]

The inventors of the present invention engaged in extensive research to solve the problems noted above. As a result, it was found that by using coated particles as the positive electrode active material for a nonaqueous electrolyte secondary battery, the coated particles having a composite oxide, in the form of a primary particle or a secondary particle, that includes at least lithium and nickel; a first layer including nickel(II) oxide on at least part of a surface of the composite oxide; and a second layer, containing lithium and one or more selected from the group consisting of boron, phosphorus, and sulfur, on at least part of a surface of the first layer, a nonaqueous electrolyte secondary battery in which the particles are used exhibits excellent charging/discharging capacity and cycle characteristics. Specifically, the present disclosure provides the following.

(1) A coated particle having:
a lithium metal composite oxide, in the form of a primary particle or a secondary particle, that includes at least lithium and nickel;
a first layer including nickel(II) oxide on at least part of a surface of the lithium metal composite oxide; and a second layer including an oxide, containing lithium and one or more selected from the group consisting of boron, phosphorus, and sulfur, on at least part of a surface of the first layer.
(2) The coated particle according to (1), wherein the lithium metal composite oxide has a layered rock-salt structure and is represented by the general formula $Li_aNi_{1-b-c}Mn_bM_cO_2$ (in the formula, M is one or more elements other than Li, Ni, Mn, and O, and $0.95 \leq a \leq 1.15$ and $0 \leq b + c \leq 0.70$).
(3) The coated particle according to (1) or (2), wherein an average thickness of the first layer is 3 nm or more and 100 nm or less.
(4) The coated particle according to (1) or (2), wherein the lithium metal composite oxide and the first layer both have a layered structure, and
the layered structure of the lithium metal composite oxide and the layered structure of the first layer form a continuous structure.
(5) A positive electrode active material for a nonaqueous electrolyte secondary battery including the coated particles according to (1) or (2).
(6) A nonaqueous electrolyte secondary battery including the positive electrode active material for a nonaqueous electrolyte secondary battery according to (5).
(7) A method for producing a coated particle, wherein a compound containing one or more selected from the group consisting of boron, phosphorus, and sulfur is added to or sprayed on a lithium metal composite oxide, in the form of a primary particle or a secondary particle, that includes at least lithium and nickel, and heat treatment is then carried out to obtain the coated particle according to (1) or (2).

[Effect of the Invention]

According to the present disclosure, in a nonaqueous electrolyte secondary battery, it is possible to provide coated particles that, when used as a positive electrode active material, allow the nonaqueous electrolyte secondary battery to exhibit excellent charging/discharging capacity and cycle characteristics while suppressing gelation of the positive electrode mix paste; as well as a positive electrode active material for a nonaqueous electrolyte secondary battery in which the coated particles are used and a nonaqueous electrolyte secondary battery.

[Brief Description of the Drawings]

Fig. 1 is a cross-sectional schematic diagram of a coated particle sample according to one embodiment of the present disclosure.

Fig. 2 is a high-resolution STEM image of the primary particle surface layer of a coated particle sample obtained in Example 3.

Fig. 3 is a drawing for describing the boundary between the lithium metal composite oxide and the first layer, as well as the boundary between the first layer and the second layer, in the high-resolution STEM image of Fig. 2.

[Embodiments of the Invention]

Embodiments of the present disclosure are described below, but the present disclosure is not limited in any way by the description of the embodiments and can be carried out with additional modifications, as appropriate.

<Coated particles>

The coated particles according to an embodiment of the present disclosure have a lithium metal composite oxide, in the form of a primary particle or a secondary particle, that includes at least lithium and nickel; a first layer including nickel(II) oxide on at least part of a surface of the lithium metal composite oxide; and a second layer including an oxide, containing lithium and one or more selected from the group consisting of boron, phosphorus, and sulfur, on at least part of a surface of the first layer.

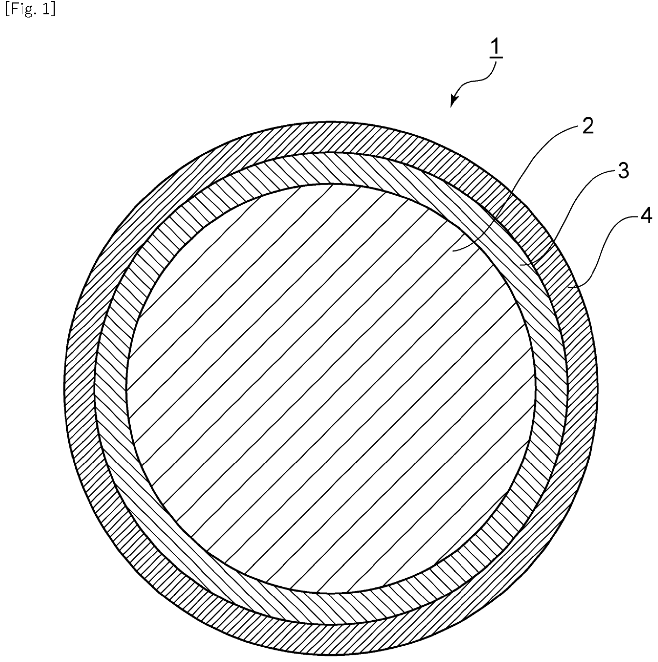

Fig. 1 is a cross-sectional schematic diagram of a coated particle sample according to one embodiment of the present disclosure. A coated particle 1 illustrated in Fig. 1 has a lithium metal composite oxide 2, in the form of a primary particle or a secondary particle, that includes at least lithium and nickel; a first layer 3 including nickel(II) oxide on at least part of a surface of the lithium metal composite oxide 2; and a second layer 4 including an oxide, containing lithium and one or more selected from the group consisting of boron, phosphorus, and sulfur, on at least part of a surface of the first layer 3. In Fig. 1, the lithium metal composite oxide 2 is illustrated in circular form, and the outer contours of the first layer 3 and the second layer 4 are also illustrated in circular form; however, the cross-sectional shape is not limited to circular form.

The lithium metal composite oxide acting as a positive electrode active material is coated with two layers, the first layer 3 including thermally and mechanically stable nickel(II) oxide, and the second layer 4 including an oxide that is highly resistant to elution into the electrolyte solution, so that when the coated particle 1 is used as a positive electrode active material, a nonaqueous electrolyte secondary battery may exhibit excellent charging/discharging capacity and cycle characteristics. Although the reasons for this are not necessarily clear, it is believed that the presence of the thermally and mechanically stable coated nickel(II) oxide layer in the form of a coating on the surface of the lithium metal composite oxide 2 may prevent the cycle characteristics from becoming compromised as a result of decomposition into rock-salt structures or spinel structures, from the surface into the interior, of the coated particle 1 serving as a highly charged positive electrode active material. It is also believed that the presence of the second layer may prevent the cycle characteristics from becoming compromised as a result of direct contact between the electrolyte solution and the coated particles serving as the positive electrode active material.

(Lithium metal composite oxide)

The lithium metal composite oxide 2 includes at least lithium and nickel, and is in the form of a primary particle or a secondary particle.

In terms of the chemical composition, the lithium metal composite oxide used is preferably, but not particularly limited to, one that has a layered rock-salt structure and is represented by the general formula $Li_aNi_{1-b-c}Mn_bM_cO_2$ (in the formula, M is one or more elements other than Li, Ni, Mn, and O, and $0.95 \leq a \leq 1.15$ and $0 \leq b + c \leq 0.70$).

In the general formula, the value of a is not particularly limited, provided that it is within the range of $0.95 \leq a \leq 1.15$; for example, it may be 0.955 or more, 0.96 or more, 0.965 or more, 0.97 or more, 0.975 or more, or 0.98 or more. On the other hand, the value of a may be 1.145 or less, 1.14 or less, 1.135 or less, 1.13 or less, 1.125 or less, 1.12 or less, 1.115 or less, 1.11 or less, 1.105 or less, 1.10 or less, 1.095 or less, 1.09 or less, 1.085 or less, 1.08 or less, 1.075 or less, or 1.07 or less.

In the general formula, the value of b + c is not particularly limited, provided that it is within the range of $0 \leq b + c \leq 0.70$; for example, it may be 0.05 or more or 0.1 or more. The value of b + c may be 0.65 or less, 0.6 or less, 0.55 or less, 0.5 or less, 0.45 or less, 0.4 or less, 0.35 or less, 0.3 or less, 0.25 or less, 0.2 or less, or 0.15 or less.

In the general formula, the element M is not particularly limited, provided that it is one or more elements other than Li, Ni, Mn, and O; for example, Co, Al, Ti, Mg, Zn, Nb, W, Mo, Sb, V, Cr, Ca, Fe, Ga, Sr, Y, Ru, In, Sn, Ta, Bi, Zr, B, or the like may be used. The type of element M should be selected depending on the purpose for which it is added. When a plurality of elements is included as the element M, the value of c represents the total amount of the plurality of elements.

(First layer)

The first layer 3 is disposed on at least part of the surface of the above lithium metal composite oxide, and includes nickel(II) oxide.

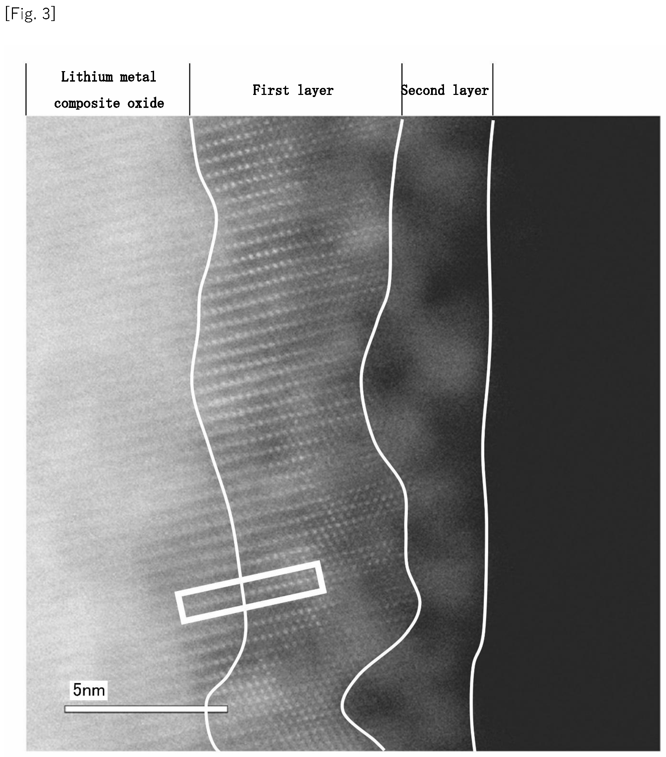

Preferably, the lithium metal composite oxide 2 and the first layer 3 form a continuous structure. The expression "the lithium metal composite oxide 2 and the first layer 3 form a continuous structure" here means that the oxygen atoms constituting the lithium metal composite oxide and the oxygen atoms constituting the first layer (both represented by relatively white dots, a typical portion of which is surrounded by a rectangle) are disposed continuously, even across the boundary therebetween, as illustrated by the high-resolution STEM image of a coated particle lattice in Fig. 3.

Since the first layer 3 contains nickel(II) oxide, it is identified as the first layer by confirming, using high-resolution STEM-EDS, that is has a rock-salt structure derived from nickel(II) oxide and that the layer contains nickel. For the second layer 4, the presence of an oxide layer of lithium and boron or the like on the surface was confirmed via XPS, and the layer including boron and oxygen was then identified as the second layer 4 via high-resolution STEM-EDS.

An average thickness of the first layer 3 is not particularly limited, but is preferably 3 nm or more, 4 nm or more, or 5 nm or more. The average thickness of the first layer is 100 nm or less, 95 nm or less, 90 nm or less, 85 nm or less, 80 nm or less, 75 nm or less, 70 nm or less, 65 nm or less, 60 nm or less, 55 nm or less, 50 nm or less, 45 nm or less, 40 nm or less, 35 nm or less, 30 nm or less, 25 nm or less, 20 nm or less, 19 nm or less, 18 nm or less, 17 nm or less, 16 nm or less, 15 nm or less, 14 nm or less, 13 nm or less, 12 nm or less, or 11 nm or less. Ensuring that the average thickness of the first layer 3 is within the prescribed range allows the resistance to be lowered during battery usage without producing any resistance components that might impede lithium mobility. The average thickness is measured via high-resolution STEM (JEM-ARM200F Dual-X, manufactured by JEOL Ltd.) at 10,000,000 times magnification. Specifically, the boundaries of the lithium metal composite oxide 2, the first layer 3, and the second layer 4 are identified as noted above, and 22 points (equally dividing the boundary length into 23 equal parts) are then established on the boundary between the lithium metal composite oxide 2 and the first layer 3. The shortest distance from each of 20 points (minus the 2 points at both ends) to the boundary between the first layer 3 and second layer 4 is used as the thickness at each point, and the average of the 20 points is used as the average thickness.

The first layer 3 may also include a compound other than nickel(II) oxide. In one embodiment, the first layer 3 preferably shares in common at least one constituent element other than lithium (Ni, Mn, M, and O) with the lithium metal composite oxide 2 (contains the same element as the lithium metal composite oxide). The inclusion of lithium in the first layer 3 is not excluded, however, and the first layer 3 may include lithium.

(Second layer)

The second layer 4 contains lithium and one or more selected from the group consisting of boron, phosphorus, and sulfur on at least part of the surface of the first layer.

An average particle size of the coated particle 1 (referring to a primary particle size in the case of a primary particle, and referring to a secondary particle size in the case of a secondary particle; sometimes abbreviated as D50) may be, but is not particularly limited to, for example, 80 nm or more, 100 nm or more, 120 nm or more, 150 nm or more, 170 nm or more, 200 nm or more, 250 nm or more, 300 nm or more, 350 nm or more, 400 nm or more, or 450 nm or more. On the other hand, the D50 of the coated particle 1 may be 25 $\mu$m or less, 24.5 $\mu$m or less, 24 $\mu$m or less, 23.5 $\mu$m or less, 23 $\mu$m or less, 22.5 $\mu$m or less, 22 $\mu$m or less, 21.5 $\mu$m or less, 21 $\mu$m or less, 20.5 $\mu$m or less, 20 $\mu$m or less, 19.5 $\mu$m or less, 19 $\mu$m or less, 18.5 $\mu$m or less, 18 $\mu$m or less, 17.5 $\mu$m or less, 17 $\mu$m or less, 16.5 $\mu$m or less, 16 $\mu$m or less, 15.5 $\mu$m or less, 15 $\mu$m or less, 14.5 $\mu$m or less, 14 $\mu$m or less, 13.5 $\mu$m or less, 13 $\mu$m or less, 12.5 $\mu$m or less, 12 $\mu$m or less, 11.5 $\mu$m or less, 11 $\mu$m or less, 10.5 $\mu$m or less, 10 $\mu$m or less, 9.5 $\mu$m or less, 9 $\mu$m or less, 8.5 $\mu$m or less, 8 $\mu$m or less, 7.5 $\mu$m or less, 7 $\mu$m or less, 6.5 $\mu$m or less, 6 $\mu$m or less, 5.5 $\mu$m or less, 5 $\mu$m or less, or 4.5 $\mu$m or less. The D50 is measured on a volume basis by a wet laser method using a laser-type particle size distribution analyzer (Microtrac HRA, manufactured by Nikkiso Co., Ltd.).

<Method for producing positive electrode active material for a nonaqueous electrolyte secondary battery>

The positive electrode active material for a nonaqueous electrolyte secondary battery according to an embodiment of the present disclosure may be produced, for example, by carrying out the following steps, in that order; however, it may be produced by another method. Even if the following steps are carried out in that order, it sometimes may not be possible to produce the positive electrode active material for a nonaqueous electrolyte secondary battery according to an embodiment of the present disclosure, depending on the combination of conditions; however, the positive electrode active material for a nonaqueous electrolyte secondary battery according to an embodiment of the present disclosure may be produced provided that at least the conditions shown in the Examples described below are used.

Step 1: A precursor composite compound containing at least nickel is synthesized, and the precursor composite compound is mixed with a lithium compound to prepare a mixture.

Step 2: The mixture prepared in Step 1 is fired.

Step 3: A composite oxide obtained by firing the mixture in Step 2 is washed with water, as needed.

Step 4: The composite oxide obtained in Step 2 or 3 is surface treated, as needed, using a compound containing one or more selected from the group consisting of boron, phosphorus, and sulfur.

[Step 1]

First, a precursor composite compound is synthesized as an aggregate formed by the gathering of primary particles that contain at least a transition metal. The method for synthesizing the precursor composite compound is not particularly limited, and the following method may be used, for example: an aqueous solution including an aqueous solution of a transition metal as well as a variety of aqueous solutions of compounds including other elements, depending on the composition of the intended composite oxide, is added drop-wise into a reactor in which an aqueous alkali solution, such as a sodium hydroxide solution or ammonia solution, is stirred as the mother liquor, for example; the pH is monitored and controlled to within a suitable range as sodium hydroxide or the like is added drop-wise; and co-precipitation is brought about by means of a wet reaction to obtain a product in the form of, for example, a hydroxide, an oxide obtained by calcining the hydroxide, or a carbonate.

In synthesis-related reactions, after the alkaline aqueous solution serving as the mother liquor has been prepared, it is preferred that the interior of the reactor be purged with an inert gas or preferably nitrogen gas for industrial purposes to create a nitrogen atmosphere in order to minimize the oxygen concentration within the reactor system or in the solution. If the oxygen concentration is excessively high, there is a risk that the co-precipitated hydroxide will be over-oxidized by any residual oxygen at or over a predetermined amount, and a risk that the formation of aggregates due to crystallization will be prevented.

The transition metal aqueous solution is not particularly limited, but use of an acidic aqueous solution, for example, is preferred, and use of a sulfuric acid aqueous solution such as a nickel sulfate aqueous solution is even more preferred in the case of nickel compounds. One or more transition metal aqueous solutions may also be used.

Examples of nickel compounds that may be used include, but are not particularly limited to, one or more selected from nickel sulfate, nickel oxide, nickel hydroxide, nickel nitrate, nickel carbonate, nickel chloride, nickel iodide, metallic nickel, and the like.

Examples of cobalt compounds that may be used include, but are not particularly limited to, one or more selected from cobalt sulfate, cobalt oxide, cobalt hydroxide, cobalt nitrate, cobalt carbonate, cobalt chloride, cobalt iodide, metallic cobalt, and the like.

Examples of manganese compounds that may be used include, but are not particularly limited to, one or more selected from manganese sulfate, manganese oxide, manganese hydroxide, manganese nitrate, manganese carbonate, manganese chloride, manganese iodide, metallic manganese, and the like.

Examples of aluminum compounds that may be used include, but are not particularly limited to, aluminum sulfate, aluminum oxide, aluminum hydroxide, aluminum nitrate, aluminum carbonate, aluminum chloride, aluminum iodide, sodium aluminate, metallic aluminum, and the like.

Examples of titanium compounds that may be used include, but are not particularly limited to, one or more selected from titanyl sulfate, titanium oxide, titanium hydroxide, titanium nitrate, titanium carbonate, titanium chloride, titanium iodide, metallic titanium, and the like.

Examples of iron compounds that may be used include, but are not particularly limited to, one or more selected from iron sulfate, iron oxide, iron hydroxide, iron nitrate, iron carbonate, iron chloride, iron iodide, metallic iron, and the like.

Examples of niobium compounds that may be used include, but are not particularly limited to, one or more selected from niobium oxide, niobium chloride, lithium niobate, niobium iodide, and the like.

Examples of tungsten compounds that may be used include, but are not particularly limited to, one or more selected from tungsten oxide, sodium tungstate, ammonium paratungstate, hexacarbonyl tungsten, tungsten sulfide, and the like.

Examples of magnesium compounds that may be used include, but are not particularly limited to, one or more selected from magnesium sulfate, magnesium oxide, magnesium hydroxide, magnesium nitrate, magnesium carbonate, magnesium chloride, magnesium iodide, metallic magnesium, and the like.

Examples of zinc compounds that may be used include, but are not particularly limited to, one or more selected from zinc sulfate, zinc oxide, zinc hydroxide, zinc nitrate, zinc carbonate, zinc chloride, zinc iodide, metallic zinc, and the like.

Examples of other elements that may be used include one or more selected from sulfates, oxides, hydroxides, nitrates, carbonates, chlorides, iodides, metals, and the like.

The proportions in which the various compounds are blended should be adjusted to ensure the desired proportions of the amounts of the various elements, taking into consideration the composition of the intended composite oxide.

An appropriate pH range for when the precursor composite compound is synthesized is not particularly limited, and may be determined so as to achieve a desired secondary particle size or coarseness/fineness, but the pH is generally within the range of approximately 10 to 13.

The precursor composite compound obtained by means of a wet reaction is preferably subjected to a washing treatment, dewatered, and then dried.

Subjecting the precursor composite compound to a washing treatment makes it possible to wash out impurities such as sulfate radicals or carbonate radicals and sodium fractions that have been incorporated into aggregated particles or that have become stuck on the surface layer during the reaction. Washing treatments that may be used include procedures in which Nutsche washing is carried out using a Büchner funnel for small amounts, and procedures in which the suspension after the reaction is pumped to a press filter to be washed with water and dewatered. Pure water, sodium hydroxide aqueous solution, sodium carbonate aqueous solution, or the like, for example, may also be used in the washing treatment, but the use of pure water is preferred for industrial purposes. For sizeable amounts of residual sulfate radicals, however, a sodium hydroxide aqueous solution, in which the pH is controlled depending on the residual amount, may be used.

The precursor composite compound synthesized in this manner and a lithium compound are then mixed in a predetermined ratio to prepare a mixture. The mixing may be solvent-based mixing in which the precursor composite compound and the lithium compound are in the form of solutions such as aqueous solutions and these solutions are mixed at prescribed proportions, or non-solvent-based mixing in which a powder of the precursor composite compound and a powder of the lithium compound are weighed out at prescribed proportions and dry mixed.

The lithium compound is not particularly limited, and a variety of lithium salts may be used. Specific examples of lithium compounds that may be used include one or more selected from anhydrous lithium hydroxide, lithium hydroxide hydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate, lithium oxide, and the like. Of these, the use of one or more selected from anhydrous lithium hydroxides and lithium hydroxide hydrates is preferred.

The proportions in which the lithium compound and the precursor composite compound are blended are not particularly limited, but should be adjusted, as appropriate, to ensure the desired proportions of the total amounts of the lithium and various other elements, in consideration of the composition of the intended composite oxide.

[Step 2]

When a composite oxide containing at least a transition metal is produced as noted above, a lithiation reaction and crystal growth occur during the firing process, but the lithiation reaction requires a certain oxygen partial pressure. The lithiation reaction produces a composite oxide that includes lithium. The temperature is then increased to a prescribed temperature to promote crystal growth.

The mixture is preferably fired to a maximum temperature of 650° C to 1,100° C, 670° C to 1,000° C, or 700° C to 980° C. The mixture is preferably fired at the maximum temperature for 1 to 24 hours, 1 to 20 hours, 1 to 15 hours, 1 to 10 hours, 2 to 9 hours, or 3 to 8 hours. The desired composite compound may be obtained by establishing the maximum temperature or time at which the firing temperature will be at or higher than the melting point of the lithium compound in the mixture, and at which the composite oxide in which the lithium is included will result in the desired crystal growth or particle growth.

Firing is commonly carried out by weighing out the lithium compound, the precursor composite compound, and a compound of element M, if needed, mixing the contents in a mixer, and loading the resulting powder mixture into a container such as a crucible or sagger; however, during the lithiation reaction in particular, it becomes increasingly difficult for the gas that is produced to be externally discharged and for the required oxygen concentration diffusion to be achieved as one gets closer to the bottom of the container loaded with the powder mixture. The reaction homogeneity and the primary particle size thus become more difficult to control.

A method in which primary firing under the prescribed conditions is first preceded by pre-firing under the following prescribed conditions in Step 2 is therefore preferably used when producing the composite oxide according to an embodiment of the present disclosure. The pre-firing is not an essential step, however.

Incorporating a firing method that promotes the lithiation reaction is particularly desirable for the pre-firing in Step 2. A specific example is a method that allows the mixture to be more easily heated, allows the gas generated from the lithium compound to be easily discharged, and allows gas having a high oxygen partial pressure to be diffused into the mixture (into the particles). The desired properties may be achieved by, for example, pre-firing less of the mixture.

For pre-firing of the mixture in Step 2, the mixture may be loaded into a sagger or crucible and fired in a static furnace, roller hearth kiln, or pusher furnace, but a rotary kiln in which the mixture is fired while flowing may also be used.

The maximum temperature of the mixture being pre-fired is not particularly limited, and is preferably adjusted depending on the type of lithium compound that is being used to prepare the mixture. This may ensure a reliable reaction between the precursor composite compound and lithium compound in the mixture, reliable and homogeneous lithiation reaction progress, and prevention of the occurrence of foreign phases, thus allowing the intended composite oxide to be obtained.

The atmosphere during pre-firing should be, but is not particularly limited to, an oxidizing atmosphere that ensures the reliable and homogeneous progress of the lithiation reaction. For example, the use of an oxidative decarboxylation gas atmosphere having a carbon dioxide gas concentration of 30 ppm or less or an oxygen atmosphere having an oxygen concentration of 80 vol% or more or 90 vol% or more is preferred.

The pre-firing time should be, but is not particularly limited to, a time that ensures reliable and homogeneous progress of the lithiation reaction. For example, a time of 1 to 10 hours or 2 to 8 hours is preferred.

Primary firing of the pre-fired mixture is carried out in order to bring about crystal growth or particle growth at a higher temperature. Reliable and homogeneous crystal growth progress is required at this time to obtain a composite oxide having a desired crystal structure.

The primary firing atmosphere should be, but is not particularly limited to, an atmosphere that has an oxygen partial pressure, and preferably a low moisture content or carbon dioxide gas concentration, that will ensure reliable and homogeneous crystal growth, without reducing the transition metal contained in the mixture that is being fired. For example, the use of a decarburized oxidizing gas atmosphere having a carbon dioxide gas concentration of 30 ppm or less or an oxygen atmosphere having an oxygen concentration of preferably 80 vol% or more or 90 vol% or more is preferred.

The primary firing temperature is not particularly limited, provided that it is higher than the pre-firing temperature, and may be adjusted depending on the composition, for example, of the composite oxide to be obtained. The maximum temperature is preferably adjusted to between 700° C and 1,100° C, between 710° C and 1,000° C, or between 720° C and 980° C, for example. A maximum temperature within the desired range makes it possible to obtain a composite oxide that has the desired crystal structure, with fewer unreacted components, and to prevent the loss of the battery characteristics of the nonaqueous electrolyte secondary battery in which the resulting composite oxide is used as the positive electrode. When obtaining, for example, a composite oxide having an Ni content of 20 mol% to 80 mol% among elements other than Li, the mixture is preferably fired at a maximum temperature that does not exceed 1,100° C.

The primary firing time is not particularly limited, but should be enough time for a composite oxide having the desired crystal structure to be formed. The time is, for example, preferably 1 to 15 hours, 2 to 12 hours, or 2 to 10 hours.

[Step 3]

The lithium metal composite oxide obtained in Step 2 may contain impurities, such as unreacted lithium compounds or lithium compounds from the crystal structure that appear on the particle surface layer over the course of the firing step. In the event of a large amount of such lithium compounds, the compound that contains one or more selected from the group consisting of boron, phosphorus, and sulfur (sometimes referred to below as "boron, etc.") (the compound is sometimes referred to below as the "compound of boron, etc.") that is used in Step 4, described later, forms an oxide of lithium and boron, etc., but may not coat the surface of the lithium metal composition oxide. Washing with water, heat treatment, and drying may be carried out, for example, in order to remove or minimize such impurities. Note that Step 3 is not mandatory.

To produce the coated particles according to an embodiment of the present disclosure in the above manner, the lithium metal composite oxide obtained in Step 2 is preferably washed with water, but over-washing the lithium metal composite oxide may result in extensive removal of even the lithium included in the crystal lattice of the lithium metal composite oxide, which may adversely affect conductivity.

On the other hand, in cases where process design, for example, precludes cleaning, another option is to increase the amount of the compound of boron, etc., that is added. The compound of boron, etc., will react with any lithium that is not included in the crystal lattice to form a compound, thus allowing lithium hydroxide generation and gelation of the positive electrode mix to be suppressed.

[Step 4]

The compound of boron, etc., is added and mixed in or sprayed on the lithium metal complex oxide obtained in Step 2 or 3 to bring the lithium metal complex oxide into contact with the compound of boron, etc., and then heat treatment is applied under specific conditions. This allows the coated particles according to an embodiment of the present disclosure to be produced. As a result of adding and mixing the compound of boron, etc., it is believed that the compound of boron, etc. reacts with protons in the crystals or water and becomes weakly acidic, that the surface of the lithium metal composite oxide partially changes into nickel oxide via a disproportionation reaction, and that the subsequent heat treatment results in the formation of a mechanically and thermally stable nickel oxide(II) layer. It is also believed that the compound of boron, etc., reacts with lithium to form a highly ion-conductive oxide of lithium and boron, etc., which coats the surface of the nickel oxide(II) layer.

One or more selected from boron compounds, phosphorus compounds, and sulfur compounds may be used as the compound added for the surface treatment noted above.

Examples of boron compounds that may be used include boric acid, lithium tetraborate, sodium tetraborate, sodium perborate, diboron trioxide, boric trifluoride, and the like.

Examples of phosphorus compounds that may be used include diammonium hydrogen phosphate, ammonium dihydrogen phosphate, calcium phosphate, calcium dihydrogen phosphate, phosphoric acid, and the like.

Examples of sulfur compounds that may be used include ammonium sulfate, lithium sulfate, sodium sulfate, sulfur fluoride, sulfuric acid, and the like.

This kind of lithium metal composite oxide may be used, for example, as a positive electrode active material for a nonaqueous electrolyte secondary battery such as a lithium secondary battery.

<Nonaqueous electrolyte secondary battery>

The nonaqueous electrolyte secondary battery according to an embodiment of the present disclosure is provided with a positive electrode containing the above lithium metal composite oxide as a positive electrode active material. The nonaqueous electrolyte secondary battery is constituted by an electrolyte solution containing, in addition to the positive electrode, a negative electrode and an electrolyte.

When producing the positive electrode, a conductive agent and a binder are added to and mixed with the lithium metal composite oxide according to an embodiment of the present disclosure. The conductive agent used is, for example, preferably acetylene black, carbon black, graphite, or the like. The binder used is, for example, preferably polytetrafluoroethylene, polyvinylidene fluoride, or the like.

The negative electrode is not particularly limited, but it is possible to use, for example, a negative electrode active material such as lithium metal, graphite, or a low crystallinity carbon material, and also one or more non-metallic or metallic elements selected from Si, Al, Sn, Pb, Zn, Bi, and Cd, alloys including these, chalcogen compounds including these, or the like.

The solvent of the electrolyte solution is not particularly limited, but it is possible to use, for example, an organic solvent including one or more selected from carbonates such as ethylene carbonate, propylene carbonate, dimethyl carbonate, diethyl carbonate, and the like, and ethers such as dimethoxyethane and the like.

The electrolyte is not particularly limited, but one or more selected from lithium salts such as lithium hexafluorophosphate ($LiPF_6$), lithium perchlorate, lithium tetrafluoroborate, and the like may be used while dissolved in a solvent.

[Examples]

The present disclosure is described in greater detail using the following examples, but is not limited to these examples.

<Sample preparation>

Samples of Examples 1 through 13 and Comparative Examples 1 and 2 were prepared by the methods given below.

[Example 1]

(Production of precursor compound)

A nickel sulfate aqueous solution as well as cobalt sulfate and manganese sulfate aqueous solution were mixed to an Ni and Co and Mn ratio (molar ratio) of Ni:Co:Mn=89:6:5 to obtain a metal aqueous solution. Ten liters of pure water to which 300 g of aqueous sodium hydroxide solution and 500 g of aqueous ammonia had been added were prepared in advance in a reactor as a mother liquid, a nitrogen atmosphere was created in the reactor by using nitrogen gas at a flow rate of 0.7 L/min, and the reaction was also carried out in a nitrogen atmosphere.

Thereafter, while rotating the stirring blade at 1,000 rpm, the metal aqueous solution, the sodium hydroxide aqueous solution, and the ammonia water were simultaneously added drop-wise at a prescribed rate, and a crystallization reaction in which the amount of the alkaline solution added drop-wise was adjusted so that the pH became 11.5 caused Ni, Co, and Mn to crystallize and co-precipitate to form aggregated particles, and a co-precipitate was thereby obtained.

The slurry inside the reactor was then separated into liquid and solids, which were washed with pure water to lower residual impurities, and the co-precipitate in the form of a cake was then dried for 12 hours at 110° C in an atmospheric environment to obtain a precursor compound.

(Production of lithium metal composite oxide)

The resulting precursor compound, anhydrous lithium hydroxide, and aluminum hydroxide were weighed out so that the ratio (molar ratio) of Al to the total amount of Ni, Co, and Mn was Al / (Ni + Co + Mn + Al) = 0.02, and the ratio (molar ratio) of Li to the total amount of Ni, Co, Mn, and Al was Li / (Ni + Co + Mn + Al) = 1.07, and these were mixed using a mixer to prepare a raw material mixture.

The mixture was then fired over a 5-hour period at a maximum temperature of 770° C in an oxygen atmosphere (oxygen concentration: 97 vol%) using an electric furnace, quenched, and then milled using a grinding mill to obtain a lithium metal composite oxide. In the lithium metal composite oxide, the average particle diameter of the secondary particles was about 12. 8 $\mu$m. The moisture content, as determined by the Karl Fischer method, was 131 ppm.

The resulting lithium metal composite oxide was introduced into pure water (water temperature: 25° C) in a reactor (10 L capacity), and the contents were stirred over a 10-minute period to prepare a slurry. Here, the ratio of the amount of the lithium metal composite oxide relative to the amount of pure water (solid-liquid ratio) was adjusted to 2,000 g/L. The resulting slurry was filtered using a Büchner funnel to obtain a cake of the lithium metal composite oxide. The moisture content of the cake was 6. 2% by weight.

The resulting cake was heat treated for 60 minutes at 100° C using a vacuum dryer, and the cake was dried to obtain a dried powder of the lithium metal composite oxide. The results of ICP measurement, to be described later, indicated that the final composition was as per the charge ratio, represented as $Li_{1.07}Ni_{0.8722}Mn_{0.049}CO_{0.0588}Al_{0.02}O_2$. In the general formula, $Li_aNi_{1-b-c}Mn_bM_cO_2$, this corresponds to a = 1. 07, b = 0. 049, and c = 0. 0788. The water content of the resulting dried powder was 653 ppm, and neutralization titration by the Warder method revealed that the residual LiOH amount was 0. 29% by weight.

(Production of coated particles)

Thereafter, boric acid powder having an average particle size of 13 $\mu$m, measured out so that the amount of B relative to a final coated particle sample was 1,000 ppm, was mixed with the dried powder using a mixer to obtain a powder mixture. The resulting powder mixture was then subjected to annealing heat treatment over a 3-hour period using an electric furnace so that the powder mixture reached a maximum temperature of 300° C in an oxygen atmosphere (oxygen concentration: 97 vol%), quenched, and then milled using a grinding mill to obtain a coated particle sample.

[Example 2]

A coated particle sample was obtained in a similar manner as in Example 1, except that the amount of boric acid powder mixed with the dried powder was changed so that the detected amount of B was 500 ppm.

[Example 3]

A coated particle sample was obtained in a similar manner as in Example 1, except that the amount of boric acid powder mixed with the dried powder was changed so that the detected amount of B was 2,000 ppm.

[Example 4]

A coated particle sample was obtained in a similar manner as in Example 1, except that when the cake was dried, the time it was dried by the vacuum dryer was changed to 30 minutes.

[Example 5]

A coated particle sample was obtained in a similar manner as in Example 1, except that when the cake was dried, the time it was dried by the vacuum dryer was changed to 90 minutes.

[Example 6]

A coated particle sample was obtained in a similar manner as in Example 1, except that the solid-liquid ratio when preparing the slurry of the lithium metal composite oxide was defined as 2,500 g/L.

[Example 7]

A coated particle sample was obtained in a similar manner as in Example 1, except that the solid-liquid ratio when preparing the slurry of the lithium metal composite oxide was defined as 1,000 g/L.

[Example 8]

A coated particle sample was obtained in a similar manner as in Example 1, except that after boric acid was mixed with the dried powder, the mixture was subjected to annealing heat treatment using an electric furnace so that the powder mixture reached a maximum temperature of 250° C in an oxygen atmosphere (oxygen concentration: 97 vol%).

[Example 9]

A coated particle sample was obtained in a similar manner as in Example 1, except that after boric acid was mixed with the dried powder, the mixture was subjected to annealing heat treatment using an electric furnace so that the powder mixture reached a maximum temperature of 350° C in an oxygen atmosphere (oxygen concentration: 97 vol%).

[Example 10]

A coated particle sample was obtained in a similar manner as in Example 1, except that after boric acid was mixed with the dried powder, the mixture was subjected to annealing heat treatment using an electric furnace so that the powder mixture reached a maximum temperature of 300° C in a low humidity decarbonated air atmosphere (oxygen concentration: 21 vol%, carbonation concentration: 10 ppm or less).

[Example 11]

A dried powder was produced in a similar manner as in Example 1. An aqueous solution into which boric acid had been dissolved was sprayed onto the dried powder. The moisture content after spraying was 20 wt%. An aqueous boric acid solution was prepared by mixing and dissolving boric acid into pure water so that the amount of B added was 1,000 ppm relative to the finally obtained coated particle sample.
The mixture was then subjected to annealing heat treatment using a vacuum dryer over a 60-minute period at 100° C, and then subjected to annealing heat treatment again using an electric furnace so that the powder mixture reached a maximum temperature of 300° C in an oxygen atmosphere (oxygen concentration: 97 vol%) to obtain a coated particle sample.

[Example 12]

A coated particle sample was obtained in a similar manner as in Example 11, except that the amount of boric acid added was changed so that the detected amount of B was 500 ppm.

[Example 13]

Diammonium hydrogen phosphate having an average particle size of 11 $\mu$m, measured out so that the amount of P relative to a final coated particle sample was 500 ppm, was mixed with the dried powder using a mixer to obtain a powder mixture. The resulting powder mixture was then subjected to annealing heat treatment over a 3-hour period using an electric furnace so that the powder mixture reached a maximum temperature of 300° C in an oxygen atmosphere (oxygen concentration: 97 vol%), quenched, and then milled using a grinding mill to obtain a coated particle sample.

[Comparative Example 1]

A lithium metal composite oxide was obtained in similar manner as in Example 1. This lithium metal composite oxide was used as a particle sample.

[Comparative Example 2]

A dried powder was obtained in a similar manner as in Example 1. This dried powder was used as a particle sample.

<Sample evaluation>

Samples of Examples 1 through 13 and Comparative Examples 1 and 2 were evaluated by the methods given below. The Examples are shown along with the results.

[Composition of precursor compound and lithium metal composite oxide]

The precursor compound or lithium metal composite oxide (0.2 g) were heated and dissolved in 25 mL of a 20% hydrochloric acid solution, cooled, and transferred to a 100 mL volumetric flask, and pure water was added to prepare an adjustment solution. The constituent elements of the adjustment solution were quantified using ICP-AES [Optima 8300, manufactured by PerkinElmer, Inc.], and it was confirmed that the precursor compound and the lithium metal composite oxide had the same charge ratio for each metal element.

[Measurement by XPS]

Information around the particle surface of samples was obtained by XPS (Quantera SXM, manufactured by Ulvac-PHI). Specifically, the surface of a sample was irradiated with soft X-rays in a super-high vacuum and photoelectrons emitted from the surface were detected by an analyzer to acquire information up to a detection depth of several nm, information about elements on the surface was obtained based on the binding energy values of bound electrons in the material, and the ratio between boron, etc./lithium was quantified using the peak surface area ratio based on information about the valence or bound state from shifts in the energy of each peak.

Conditions of measurement

    Equipment: Quantera SXM (Ulvac-PHI)
    Excitation X-ray: Monochromatic Al K 1, 2 rays (1486. 6eV)
    X-ray diameter: 200 m
    Photoelectron detection angle: 45 degrees (tilt of detector relative to sample surface)

[Measurement by high-resolution STEM]

Samples were collected in a glove box (dew point: -70° C or less) and were transferred while protected against exposure to the atmosphere in a transfer vessel to a processor/analyzer. Thin section TEM analysis samples were first prepared using FIB, high-resolution STEM images were then acquired via atomic resolution electron microscopy (JEM-ARM200F Dual-X (aberration-corrected), manufactured by JEOL Ltd.) at an acceleration voltage of 200 kV, and EDX mapping analysis was performed to obtain elemental mapping images.

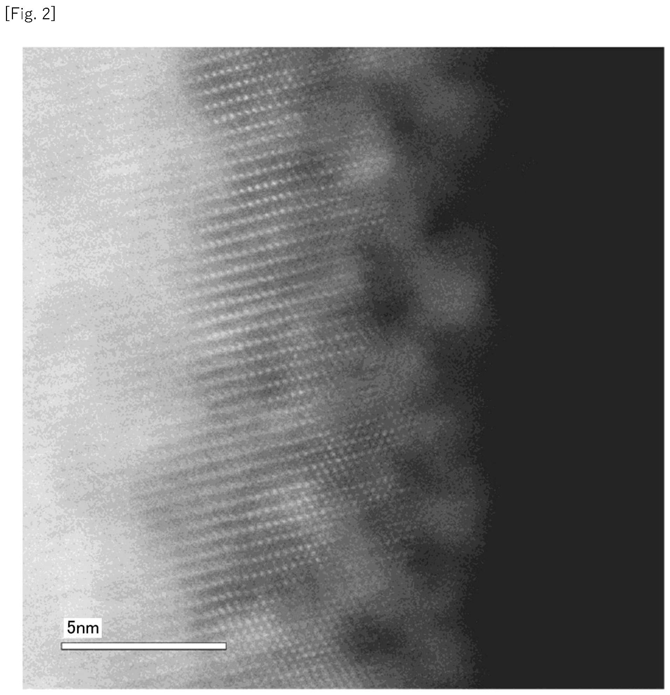

The Fourier transform patterns of the resulting high-resolution STEM images were checked, revealing that the samples of Examples 1 through 13 had a structure in which the surface of the lithium metal composite oxide had been coated with two layers, consisting of first and second layers. More specifically, the lithium metal composite oxide had a layered rock-salt structure, where the first layer was a nickel(II) oxide layer that had a NaCl structure (rock-salt structure). Figs. 1 and 2 are illustrated as representative drawings. Fig. 1 is a high-resolution STEM image of the primary particle surface layer of the coated particle sample obtained in Example 3. Fig. 2 is a drawing for describing the boundary between the lithium metal composite oxide and the first layer, as well as the boundary between the first layer and the second layer, in the high-resolution STEM image of Fig. 1. More detailed examination of the drawings revealed that the layered rock-salt structure of the lithium metal composite oxide and the rock-salt structure of the first layer formed a continuous structure. As illustrated by the high-resolution STEM image of a coated particle lattice in Fig. 2, the oxygen atoms constituting the lithium metal composite oxide and the oxygen atoms constituting the first layer (both represented by relatively white dots, a typical portion of which is surrounded by a rectangle) were disposed continuously, even across the boundary therebetween.

The average thickness of the first layer and the second layer was measured via high-resolution STEM at 10,000,000 times magnification. Specifically, the boundaries of the composite oxide, the first layer, and the second layer were identified as noted above, and 22 points (equally dividing the boundary length into 23 equal parts) were then established on the boundary between the lithium metal composite oxide and the first layer to determine the thickness of the first layer. The shortest distance from each of 20 points (minus the 2 points at both ends) to the boundary between the first layer and second layer was used as the thickness at each point, and the average of the 20 points was used as the average thickness of the first layer. For the thickness of the second layer, 22 points (equally dividing the boundary length into 23 equal parts) were then established on the boundary between the first layer and the second layer. The shortest distance from each of 20 points (minus the 2 points at both ends) to the surface of the second layer was used as the thickness at each point, and the average of the 20 points was used as the average thickness of the second layer.

[Measurement of moisture content]

The moisture content (ppm) of the samples was defined as the amount of moisture that had been produced up to 300° C based on the Karl Fischer method (coulometric titration).

[Measurement of amount of residual lithium hydroxide]

The amount of residual lithium hydroxide in each sample was measured and calculated based on the Warder method during neutralizing titration. Specifically, the amount was determined by adding 20 g of a particle powder sample to 100 mL of water, stirring the contents for 20 minutes at room temperature, filtering off the solids, and removing and titrating the resulting supernatant using 0.2 N hydrochloric acid. Two points where the slope was greatest on a pH curve drawn by plotting the titrated amount (mL) on the horizontal axis and supernatant pH on the vertical axis were used as the first titration point and second titration point, starting from the point where the titrated amount was smaller, and the value was calculated using a formula from the titration amounts at these points.

[Nonaqueous electrolyte secondary battery characteristics]

(Manufacture of coil cells using the positive electrode active material)

2032-Type coin cells employing the positive electrode active material were manufactured using a positive electrode, negative electrode, and electrolytic solution that had been manufactured as follows.

• Positive electrode

Using acetylene black and graphite as the conductive agent at a weight ratio of acetylene black:graphite=1:1, and using polyvinylidene fluoride as the binder, the sample serving as the positive electrode active material, the conductive agent, and the binder were blended to achieve a weight ratio of positive electrode active material:conductive agent:binder=90:6:4, and a slurry obtained by mixing these materials with N-methylpyrrolidone was coated on aluminum foil. A sheet was manufactured by drying the coated aluminum foil at 110°C, and the sheet was punched out at a diameter of 15 mm$\Phi$, rolled with pressure to achieve a composite density of 3. 0 g/cm$^3$, and used as the positive electrode.

• Negative electrode

Lithium foil having a thickness of 500 $\mu$m, punched out to a diameter of 16 mm $\Phi$, was used as the negative electrode.

• Electrolye solution

An ethylene carbonate (EC) and dimethyl carbonate (DMC) solvent mixture was prepared to an EC:DMC volume ratio of 1:2, and a solution obtained by mixing 1 M LiPF$_6$ (electrolyte) with the solvent mixture was used as the electrolyte solution.

(Initial charging capacity and initial charging/discharging efficiency)

Using the coin cells produced by the method described above, constant current charging was performed at a current density of 18 mA/g to 4.30 V (upper limit voltage) in a 25° C environment, and then constant voltage charging was performed until the current reached 1. 8 mA/g. The capacity at this time was defined as the initial charging capacity (mAh/g).

After a 5-minute pause, constant current discharging was then performed at a current density of 18 mA/g to 3.00 V under the same conditions, and the initial discharging capacity (mAh/g) was measured after a 5-minute pause. The series of steps up to measurement of the initial discharging capacity was defined as one charging/discharging cycle according to a Condition A.

The initial charging/discharging efficiency was calculated on the basis of the following equation using the measured value of the initial charging capacity and the measured value of the initial discharging capacity.

Initial charging/discharging efficiency (%) = (initial discharging capacity/initial charging capacity) × 100

(Cycle retention rate)

The coin cells that had been produced were charged/discharged for 104 cycles in a 60° C environment under the conditions indicated below. 1 C was defined as a current density of 180 mA/g. During charging, constant current charging was performed up to the cut-off voltage, and then constant voltage charging was performed until the current reached 1. 8 mA/g.

- 1st, 2nd, and 104th cycles:

    Constant current charge of 0.2 C up to 4. 3 V, then constant voltage charge up to 0. 01 C 5-minute pause
    Constant current discharge of 0.2 C up to 3.0 V
    5-minute pause

- 3rd to 103rd cycles:

    Constant current charge of 0.5 C up to 4. 3 V, then constant voltage charge up to 0. 01 C 5-minute pause
    Constant current discharge of 1 C up to 3.0 V
    5-minute pause

The cycle retention rate at 60° C was calculated based on the following equation using the measured value of the discharging capacity in the 2nd cycle and the measured value of the discharging capacity in the 104th cycle.

$$\text{Cycle retention rate (\%)}$$
$$= (\text{discharging capacity in the 104th cycle/discharging capacity in the 2nd cycle}) \times 100$$

(Initial reaction resistance)

The coin cells that had been produced were used to measure the initial reaction resistance in a 25° C environment under the conditions indicated below.

- 1st cycle:

    Constant current charge of 0.01 C up to 4.3 V, then constant voltage charge up to 0.01 C 5-minute pause
    Constant current discharge of 0.1 C up to 2.5 V
    5-minute pause

- 2nd cycle:

    Constant current charge of 0.1 C up to 4.3 V, then constant voltage charge up to 0.01 C
    The impedance was measured in a 25° C environment under the conditions indicated below using cells with a completed 2nd cycle of charging. The result was defined as the impedance measurement result for the 2nd cycle (reaction resistance for the 2nd cycle (initial reaction resistance)).
    Frequency range: 300 k-0. 01 Hz (76 points)
    Amplitude: 10 mV

The manufacturing conditions and evaluation results of Examples 1 through 13 and Comparative Examples 1 and 2 are shown in Table 1 below.

[Table 1]

| | Manufacturing conditions | | | | | | | | Sample evaluation results | | | | | Evaluation as positive electrode active material | | | |
|---|---|---|---|---|---|---|---|---|---|---|---|---|---|---|---|---|---|
| | Solid-liquid ratio when washing with water (-) | Lithium metal complex oxide moisture content (ppm) before addition of boron, etc. | Lithium metal complex oxide residual LiOH amount (wt%) before addition of boron, etc. | Type of element added | Type of compound of boron, etc. added | Amount of boron, etc. added/sample (ppm) | Heat treatment temperature (°C) | Boron, etc/Li (mol/mol) | Residual LiOH amount (wt%) | Decrease of residual LiOH (%) | Average thickness of the first layer (nm) | Average thickness of the second layer (nm) | Initial charging capacity (mAh/g) | Initial discharging capacity (mAh/g) | Initial charging/discharging efficiency (%) | Initial reaction resistance (Ω) | Cycle retention rate (%) |
| Example 1 | 2,000 | 653 | 0.29 | B | $H_3BO_3$ | 1000 | 300 | 0.76 | 0.08 | 72 | 7 | 6 | 240.8 | 216.0 | 89.7 | 30.6 | 84.0 |
| Example 2 | 2,000 | 653 | 0.29 | B | $H_3BO_3$ | 500 | 300 | 0.38 | 0.08 | 72 | 5 | 2 | 240.0 | 213.5 | 89.0 | 33.8 | 78.6 |
| Example 3 | 2,000 | 653 | 0.29 | B | $H_3BO_3$ | 2,000 | 300 | 1.53 | 0.06 | 79 | 10 | 10 | 237.1 | 211.4 | 89.2 | 34.1 | 86.2 |
| Example 4 | 2,000 | 1521 | 0.31 | B | $H_3BO_3$ | 1000 | 300 | 0.72 | 0.11 | 65 | 6 | 6 | 241.3 | 214.7 | 89.0 | 34.6 | 80.4 |
| Example 5 | 2,000 | 262 | 0.28 | B | $H_3BO_3$ | 1000 | 300 | 0.79 | 0.07 | 75 | 7 | 5 | 241.5 | 216.5 | 89.6 | 31.9 | 83.8 |
| Example 6 | 2500 | 631 | 0.45 | B | $H_3BO_3$ | 1000 | 300 | 0.49 | 0.11 | 76 | 5 | 5 | 243.0 | 218.1 | 89.8 | 29.2 | 85.4 |
| Example 7 | 1000 | 672 | 0.22 | b | $H_3BO_3$ | 1000 | 300 | 1.01 | 0.07 | 66 | 8 | 5 | 242.9 | 217.6 | 89.6 | 43.5 | 80.2 |
| Example 8 | 2,000 | 653 | 0.29 | B | $H_3BO_3$ | 1000 | 250 | 0.76 | 0.11 | 62 | 7 | 6 | 236.6 | 209.5 | 88.6 | 56.6 | 90.2 |
| Example 9 | 2,000 | 653 | 0.29 | B | $H_3BO_3$ | 1000 | 350 | 0.76 | 0.16 | 45 | 7 | 5 | 238.2 | 212.0 | 89.0 | 45.2 | 86.9 |
| Example 10 | 2,000 | 653 | 0.29 | B | $H_3BO_3$ | 1000 | 300 | 0.76 | 0.10 | 66 | 6 | 5 | 240.3 | 213.0 | 88.7 | 43.3 | 81.3 |
| Example 11 | - | 208 | 0.55 | B | $H_3BO_3$ | 1000 | 300 | 0.40 | 0.17 | 69 | 4 | 5 | 236.6 | 206.3 | 87.2 | 40.3 | 86.5 |
| Example 12 | - | 208 | 0.55 | B | $H_3BO_3$ | 500 | 300 | 0.20 | 0.20 | 63 | 2 | 3 | 236.8 | 207.2 | 87.5 | 36.6 | 80.4 |
| Example 13 | 2,000 | 653 | 0.3 | P | $(NH_4)_2HPO_4$ | 500 | 300 | 0.12 | 0.03 | 91 | 4 | 3 | 236.9 | 213.4 | 90.1 | 27.7 | 86.1 |
| Comparative Example 1 | - | - | - | - | - | - | - | - | 0.33 | - | 0 | 0 | 239.1 | 210.7 | 88.1 | 1.1 | 56.8 |
| Comparative Example 2 | 2,000 | - | 0.29 | - | - | - | 300 | - | 0.05 | 83 | 8 | 0 | 240.0 | 210.1 | 87.6 | 190.2 | 67.9 |

[Description of Reference Numerals]

1     Coated particle
2     Lithium metal composite oxide
3     First layer
4     Second layer

**Claims**

1. A coated particle comprising:
   a lithium metal composite oxide, in the form of a primary particle or a secondary particle, that comprises at least lithium and nickel;

   a first layer comprising nickel(II) oxide on at least part of a surface of the lithium metal composite oxide; and
   a second layer comprising an oxide, containing lithium and one or more selected from the group consisting of boron, phosphorus, and sulfur, on at least part of a surface of the first layer.

2. The coated particle according to claim 1, wherein
   the lithium metal composite oxide has a layered rock-salt structure and is represented by the general formula $Li_aNi_{1-b-c}Mn_bM_cO_2$ (in the formula, M is one or more elements other than Li, Ni, Mn, and 0, and $0.95 \leq a \leq 1.15$ and $0 \leq b + c \leq 0.70$).

3. The coated particle according to claim 1 or 2, wherein
   an average thickness of the first layer is 3 nm or more and 100 nm or less.

4. The coated particle according to claim 1 or 2, wherein
   the lithium metal composite oxide and the first layer form a continuous structure.

5. A positive electrode active material for a nonaqueous electrolyte secondary battery, comprising:
   the coated particle according to claim 1 or 2.

6. A nonaqueous electrolyte secondary battery, comprising:
   the positive electrode active material for a nonaqueous electrolyte secondary battery according to claim 5.

7. A method for producing a coated particle, wherein
   a compound containing one or more selected from the group consisting of boron, phosphorus, and sulfur is added to or sprayed on a lithium metal composite oxide, in the form of a primary particle or a secondary particle, that comprises at least lithium and nickel, and heat treatment is then carried out to obtain the coated particle according to claim 1 or 2.

[Fig. 1]

[Fig. 2]

5nm

[Fig. 3]

## INTERNATIONAL SEARCH REPORT

International application No.

**PCT/JP2024/026838**

### A. CLASSIFICATION OF SUBJECT MATTER

*H01M 4/525*(2010.01)i; *C01G 53/00*(2006.01)i; *H01M 4/36*(2006.01)i; *H01M 4/505*(2010.01)i
FI:   H01M4/525; H01M4/36 C; H01M4/505; C01G53/00 A

According to International Patent Classification (IPC) or to both national classification and IPC

### B. FIELDS SEARCHED

Minimum documentation searched (classification system followed by classification symbols)

H01M4/525; C01G53/00; H01M4/36; H01M4/505

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-520909 A (NINGDE AMPEREX TECHNOLOGY LIMITED) 04 April 2022 (2022-04-04)<br>claims, example 1 | 1-7 |
| X | JP 2020-532839 A (LG CHEM, LTD.) 12 November 2020 (2020-11-12)<br>claims, example 3 | 1-7 |
| X | JP 2022-532110 A (LG CHEM, LTD.) 13 July 2022 (2022-07-13)<br>claims, example 1 | 1-7 |
| A | JP 2015-099767 A (NICHIA CORPORATION) 28 May 2015 (2015-05-28) | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/026838**

| Patent document cited in search report | | | Publication date (day/month/year) | Patent family member(s) | | | Publication date (day/month/year) |
|---|---|---|---|---|---|---|---|
| JP | 2022-520909 | A | 04 April 2022 | EP | 3879600 | A1 | |
| | | | | claims, example 1 | | | |
| | | | | WO | 2021/146943 | A1 | |
| | | | | CN | 113169322 | A | |
| | | | | KR | 10-2021-0096556 | A | |
| JP | 2020-532839 | A | 12 November 2020 | US | 2020/0381719 | A1 | |
| | | | | claims, example 3 | | | |
| | | | | WO | 2019/143047 | A1 | |
| | | | | EP | 3660964 | A1 | |
| | | | | KR | 10-2019-0088786 | A | |
| | | | | CN | 111033832 | A | |
| JP | 2022-532110 | A | 13 July 2022 | US | 2022/0263073 | A1 | |
| | | | | claims, example 1 | | | |
| | | | | WO | 2021/101281 | A1 | |
| | | | | EP | 3943452 | A1 | |
| | | | | KR | 10-2021-0063247 | A | |
| | | | | CN | 113795464 | A | |
| JP | 2015-099767 | A | 28 May 2015 | US | 2015/0108397 | A1 | |

Form PCT/ISA/210 (patent family annex) (July 2022)

**EP 4 752 973 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005097087 A
- JP 2019114560 A